# EUROPEAN PATENT SPECIFICATION

(11) **EP 3 424 270 B1**
(45) Date of publication and mention of the grant of the patent: **09.10.2019**
(21) Application number: 17708756.6
(22) Date of filing: 03.03.2017
(51) Int. Cl.: H05B 6/06, H05B 6/12

(54) **INDUCTION HEATING COOKER WITH DUAL-COIL HEATER AND VESSEL DETECTION METHOD**
INDUKTIONSHERD MIT DOPPELSPULENHEIZUNG UND GEFÄSSDETEKTIONSVERFAHREN
APPAREIL DE CUISSON À CHAUFFAGE PAR INDUCTION AVEC DISPOSITIF DE CHAUFFAGE À BOBINE ET PROCÉDÉ DE DÉTECTION DE RÉCIPIENT

(30) Priority: 04.03.2016 TR 201602877
(43) Date of publication of application: 09.01.2019
(73) Proprietor: Arçelik Anonim Sirketi, 34445 Istanbul (TR)
(72) Inventor: OZTURK, Metin, 34950 Istanbul (TR); SARIOGLU, Atakan, 34950 Istanbul (TR); OKTAY, Ulas, 34950 Istanbul (TR); SINIRLIOGLU, Sercan, 34950 Istanbul (TR)
(86) International application number: PCT/EP2017/054983
(87) International publication number: WO 2017/149108

(56) References cited:
- EP-A1- 0 716 560
- EP-A1- 1 868 417
- EP-A1- 1 943 878
- EP-A1- 2 342 943
- WO-A1-2014/131721
- WO-A1-2015/043650

## Description

The present invention relates to an induction heating cooker comprising a heater with concentric dual coils and to the vessel detection method.

In the induction heating cookers, various induction coil structures are developed for heating vessels in different sizes. The use of heaters with concentric dual induction coils are known in order to efficiently heat the vessels both with a large diameter and a small diameter on the same heating zone with homogeneous heat distribution. After the presence of the vessel placed on the dual induction coil heating zone is detected with various methods, the induction coils are energized and the heating process is performed. When the diameter of the vessel placed on the heating zone is small, the vessel covers only the inner induction coil and the inner induction coil is energized. When the vessel has a large diameter, the vessel covers both concentric induction coils and thus both induction coils are energized together. During the vessel detection process, the concentric induction coils are affected by the magnetic fields generated by the same and detection errors may occur. In particular different detection frequencies applied to the concentric induction coils driven by different power sources cause the generation of noises that disturb the user. The errors in the vessel detection process cause excessive consumption of energy, delicate electronic components are damaged and the vessel cannot be properly heated.

The International Patent Application No. WO2015043650 relates to an induction heating cooktop comprising a dual-coil heater.

The European Patents No. EP1868417 and EP2342943 relate to an induction heating cooktop comprising a dual-coil heater. The induction coils are energized by at least one power source.

The European Patent No. EP1943878 relates to an induction cooking hob comprising a first heating zone with at least two induction coils independently energized by means of a power source and an additional heating zone energized by means of a second power source.

The aim of the present invention is the realization of an induction heating cooker comprising a heater with concentric dual induction coils disposed in a heating zone and wherein the vessel detection time is reduced, and the realization of a vessel detection method.

In the induction heating cooker realized in order to attain the aim of the present invention, explication in the first claim and the respective claims thereof, a signal at a constant detection frequency is simultaneously transmitted to the concentric induction coils by means of the power control circuits whereto the coils are connected and the detection of the vessel placed on the heating zone is started.

A common detection frequency for both coils is determined according to the feedback received from the power control circuit whereto the coil detecting the vessel before the other is connected.

The common detection frequency determined by the coil detecting the vessel first is applied to the coil detecting the same after the other.

The common heating frequency to be applied to both coils at any power setting is determined according to the feedback received from the power control circuit whereto the coil detecting the vessel first is connected.

In the induction heating cooker of the present invention, the time for detecting the vessel placed on the heating zone and thus the time for starting the heating at the desired power setting is shortened, hence providing energy saving and preventing the generation of noise.

The induction heating cooker and the vessel detection method realized in order to attain the aim of the present invention are illustrated in the attached figures, where:
Figure 1 - is the schematic perspective view of an induction cooker comprising the dual-coil heater.
Figure 2 - is the schematic view of the vessel detection method in the induction heating cooker.
Figure 3 - is the schematic view of the state where the vessel is not detected on the coil-2 in the embodiment of Figure 2.
Figure 4 - is the schematic view of the vessel detection method in an embodiment of the present invention.
Figure 5 - is the schematic view of the state where the vessel is not detected on the coil-2 in the embodiment of Figure 4.
Figure 6 - is the schematic view of the vessel detection method in another embodiment of the present invention.
Figure 7 - is the schematic view of the state where the vessel is not detected on the coil-2 in the embodiment of Figure 6.

The elements illustrated in the figures are numbered as follows:
1 - Induction heating cooker
2 - Heater
3 - Power control circuit
4 - Microcontroller
Z: Heating zone
Coil-1: Coil detecting the vessel first
Coil-2: Coil detecting the vessel after
F-detection: Constant vessel detection frequency applied at the beginning
F-detection-common: Common vessel detection frequency
F-heating-common: Common heating frequency
t: Time

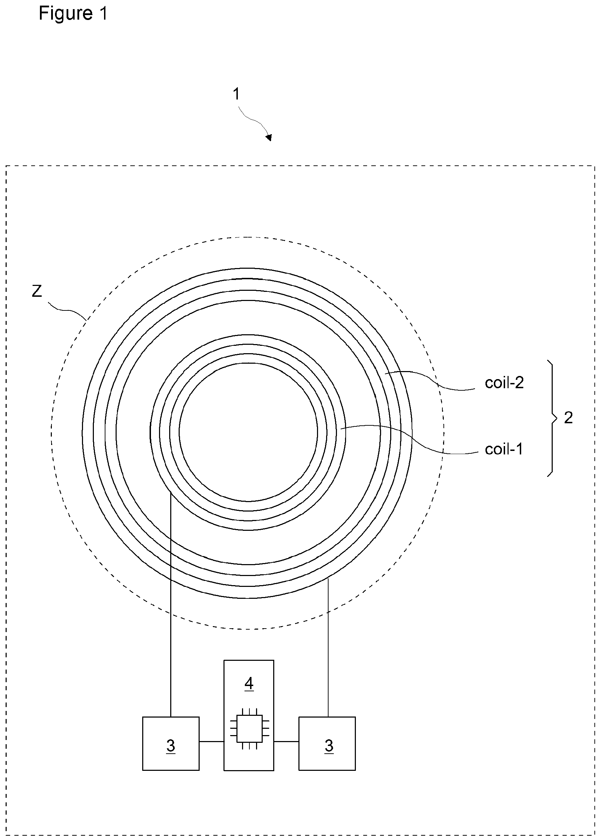

The induction heating cooker (1) comprises a heater (2) with concentric dual coils (coil-1, coil-2) applying magnetic energy for heating a vessel placed on a heating zone (Z), two power control circuits (3) that enable the coils (coil-1, coil-2) to be driven separately, and a microcontroller (4) that controls the operation of the power control circuits (3) (Figure 1).

In the induction heating cooker (1), when the vessel is placed on the heating zone (Z) and a power setting is adjusted, the presence of the vessel on the inner coil or on the inner and the outer coils (coil-1, coil-2) is detected before the heating process. After the detection of the vessel, the coils are energized according to the amount of the coils (coil-1, coil-2) covered by the vessel, thus the heating process is started according to the heating level set by the user. For the vessel detection method, the microcontroller (4) enables the power control circuit (3) of each coil (coil-1, coil-2) to transmit signals at a certain detection frequency and the presence of the vessel is detected according to the feedback of the relevant coil (coil-1, coil-2). Since especially the winding numbers and the dimensions of the coils (coil-1, coil-2) are different, the vessel detection times thereof are also different, and in the embodiment of the present invention, the inner or outer coil detecting the presence of the vessel placed on the heating zone (Z) "before" the other one (other coil) will be referred to as the "coil-1". Similarly, the inner or outer coil detecting the vessel placed on the heating zone (Z) "after" the other one will be referred to as the "coil-2".

The induction heating cooker (1) of the present invention comprises the microcontroller (4)
- that starts the process of detecting the vessel placed on the heating zone (Z) by transmitting a signal at a constant detection frequency (F-detection) simultaneously to the coils (coil-1, coil-2) by means of the power control circuit (3),
- that determines the common detection frequency (F-detection-common) for the coils (coil-1, coil-2) according to the feedback that is received from the coil (coil-1) (from the power control circuit (3) whereto the coil-1 is connected) detecting the vessel "before" the other one and that is affected by the equivalent resistance and the inductance of the vessel together with the coil-1, and
- that enables the presence of the vessel to be detected by applying the common detection frequency (F-detection-common) determined by the coil (coil-1) detecting the vessel "before" to the coil (coil-2) detecting the vessel "after" the other one.

In the induction heating cooker (1) of the present invention, the vessel detection process is simultaneously started in the coil-1 and coil-2. The microcontroller (4) enables the power control circuits (3) to transmit the detection frequency (F-detection) to the coil-1 and coil-2. According to the feedback received from the coil-1 (from the power control circuit (3) whereto the coil-1 is connected), for example, according to the period of the square wave signals generated at the output of a comparator circuit disposed in the power control circuit (3), the microcontroller (4) updates the detection frequency (F-detection) and determines a common detection frequency (F-detection-common) for the coil-1 and coil-2. The microcontroller (4) provides that the vessel detection process in the coil-2 continues at the common detection frequency (F-detection-common) and that the vessel detection process is quickly completed.

The microcontroller (4) furthermore determines the common heating frequency (F-heating-common) to be applied to the coil-1 and the coil-2 at any power setting according to the feedback received from the coil-1 detecting the vessel first (from the power control circuit (3) whereto the coil-1 is connected).

The microcontroller (4) determines a common heating frequency (F-heating-common-1, F-heating-common-2, ...) for the coil-1 and the coil-2 at any power setting such as 1, 2, ... set for heating and a common resonance frequency for the coil-1 and the coil-2 when the power setting is set to maximum, thus preventing the magnetic fields in the coil-1 and the coil-2 from affecting each other during both the vessel detection and the heating processes and preventing the generation of noise.

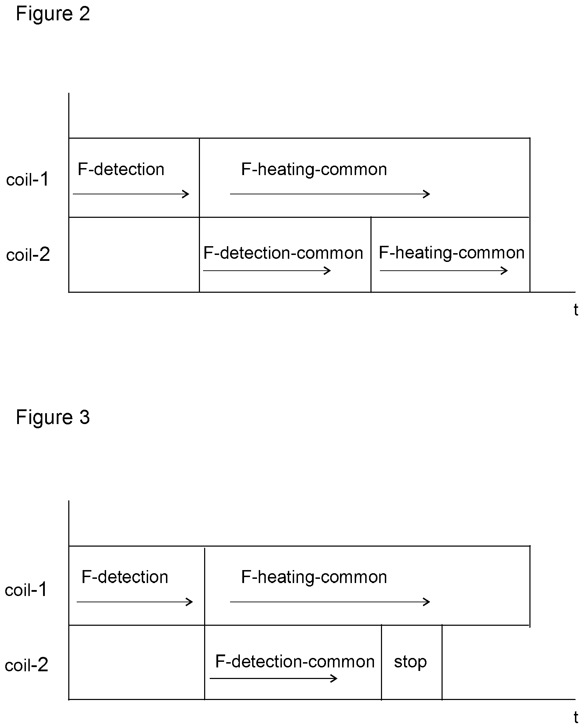

In an embodiment of the present invention, the microcontroller (4) enables the coil-1 to be energized in order to heat the vessel without waiting for the result of the detection process in the coil-2 when the vessel detection process in the coil-1 is completed (Figure 2). When the vessel detection process in the coil-2 is completed and if the vessel is present on the coil-2, the microcontroller (4) also energizes the coil-2. If the vessel does not cover the coil-2, the coil-2 is deactivated (Figure 3).

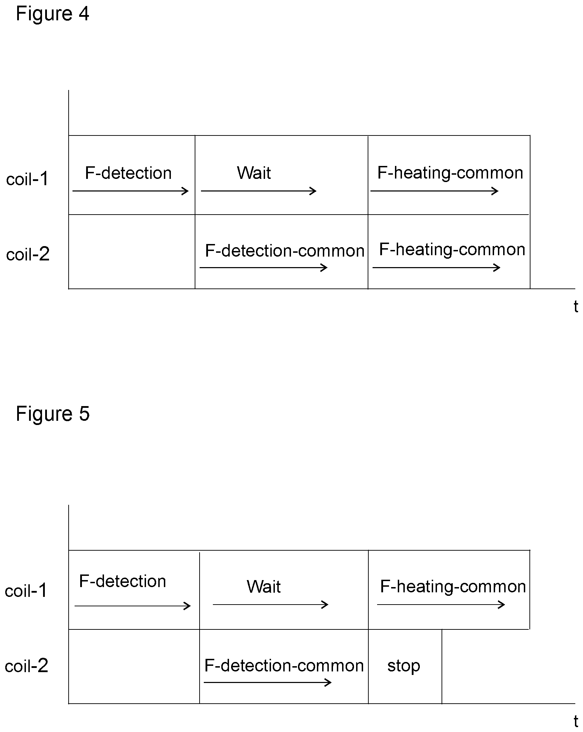

In another embodiment of the present invention, the microcontroller (4) waits for the result of the detection process in the coil-2 when the vessel detection process in the coil-1 is completed and enables both the coil-1 and the coil-2 to be energized for the heating process (Figure 4). If the vessel does not cover the coil-2, the coil-2 is deactivated (Figure 5).

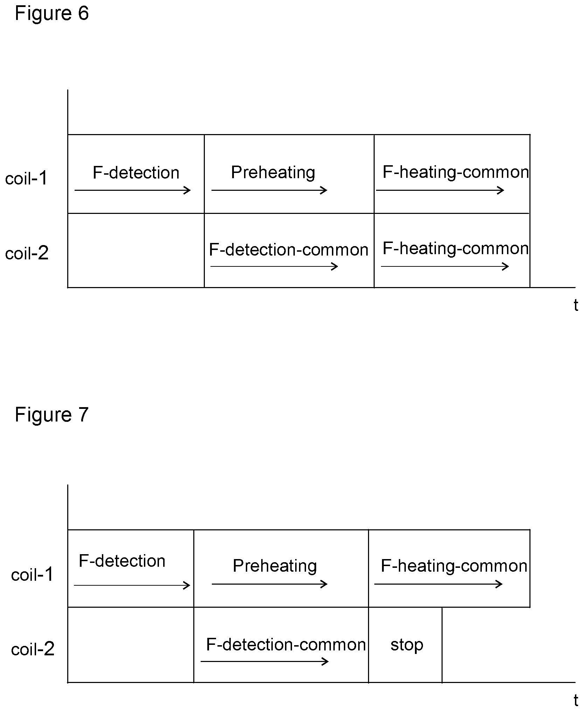

In a version of the above-disclosed embodiment, the microcontroller (4) provides the application of a "preheating" by operating the coil-1 at a power lower than the power set (at a frequency higher than the frequency corresponding to the power setting) during the waiting time elapsing until the detection process in the coil-2 is completed at the end of the vessel detection process in the coil-1 (Figure 6). If the vessel does not cover the coil-2, the coil-2 is deactivated (Figure 7).

The microcontroller (4) enables the power control circuits (3) to transmit signal at the same phase to the coil-1 and the coil-2 during the vessel detection and heating processes, thus preventing the generation of noise in both processes.

The induction heating cooker (1) vessel detection method of the present invention comprises the steps of
- sending signal at the detection frequency (F-detection) simultaneously by the power control circuits (3) in order to detect the presence of the vessel on the concentric coil-1 and coil-2,
- by updating the detection frequency (F-detection) according to the feedback received from the power control circuit (3) of the coil-1 detecting the vessel first, determining a common detection frequency (F-detection-common) for the coil-1 and the coil-2 and the common heating frequency (F-heating-common) to be applied to the coil-1 and the coil-2 depending on the power setting selected by the user,
- starting the heating process by applying the common heating frequency (F-heating-common) to the coil-1 according to the power setting selected by the user,
- continuing the detection process in the coil-2 at the determined common detection frequency (F-detection-common),
- starting the heating process by applying the common heating frequency (F-heating-common) to the coil-2 when the vessel is detected thereon, and
- deactivating the coil-2 if the vessel is not detected on the coil-2.

In the induction heating cooker (1) vessel detection method of the present invention, the vessel detection process is simultaneously applied on the coil-1 and the coil-2; however, the moment of energization for heating the vessel varies depending on the vessel detection time of the coil-1 and the coil-2. The coil-1 and the coil-2 are independently energized when the vessel detection process of each one is completed (Figure 2, 3).

In an embodiment of the present invention, in the vessel detection method, before the step of starting the heating process by applying the common heating frequency (F-heating-common) to the coil-1, it is waited for the completion of the vessel detection process in the coil-2 (Figure 4, 5).

In another embodiment of the present invention, in the vessel detection method, a "preheating" process is performed by operating the coil-1 at a power lower than the power set (at a frequency higher than the frequency corresponding to the power setting) during the waiting time elapsing until the detection process in the coil-2 is completed, thus preventing time loss. If the vessel is detected to be present on the coil-2, the preheating process in the coil-1 is terminated and the coil-1 and the coil-2 are heated at the common heating frequency (F-heating-common) determined during the vessel detection process (Figure 6), and if the vessel is not detected on the coil-2, only the coil-1 is heated at the common heating frequency (F-heating-common), thus continuing the heating process (Figure 7).

In the induction heating cooker (1) of the present invention comprising the heater (2) with concentric dual coils (coil-1, coil-2), the time for detecting the vessel placed on the heating zone (Z) and thus the time for starting the heating at the desired power setting is shortened, hence providing energy saving. Moreover, the generation of noise during the detection and heating processes is prevented.

## Claims

1. An induction heating cooker (1) **comprising** a heater (2) with concentric dual coils applying magnetic energy for heating a vessel placed on a heating zone (Z), two power control circuits (3) that enable the coils to be driven separately, and a microcontroller (4) that controls the operation of the power control circuits (3), **characterized by** the microcontroller (4)
- that starts the process of detecting the vessel placed on the heating zone (Z) by transmitting a signal at a constant detection frequency (F-detection) simultaneously to the coils by means of the power control circuit (3),
- that determines the common detection frequency (F-detection-common) for the coils according to the feedback received from the first coil (coil-1), wherein the first coil is one of the concentric dual coils that detects the vessel first, and
- that enables the presence of the vessel to be detected by applying the common detection frequency (F-detection-common) to the second coil (coil-2), wherein the second coil (coil-2) is the other one of the concentric dual coils that completes the vessel detection process after the first coil (coil-1).

2. An induction heating cooker (1) as in Claim 1, **characterized by** the microcontroller (4) that determines the common heating frequency (F-heating-common) to be applied to the first coil (coil-1) and the second coil (coil-2) at any power setting according to the feedback received from the first coil (coil-1).

3. An induction heating cooker (1) as in Claim 1 or 2, **characterized by** the microcontroller (4) that enables the first coil (coil-1) to be energized in order to heat the vessel without waiting for the result of the detection process in the second coil (coil-2) when the vessel detection process in the first coil (coil-1) is completed.

4. An induction heating cooker (1) as in Claim 1 or 2, **characterized by** the microcontroller (4) that waits for the result of the detection process in the second coil (coil-2) when the vessel detection process in the first coil (coil-1) is completed and that enables the first coil (coil-1) and the second coil (coil-2) to be simultaneously energized for the heating process in order to heat the vessel.

5. An induction heating cooker (1) as in Claim 4, **characterized by** the microcontroller (4) that provides the application of a preheating by operating the first coil (coil-1) at a power lower than the power set during the waiting time elapsing until the detection process in the second coil (coil-2) is completed at the end of the vessel detection process in the first coil (coil-1).

6. An induction heating cooker (1) as in Claim 1, **characterized by** the microcontroller (4) that enables the power control circuits (3) to transmit signal at the same phase to the first coil (coil-1) and the second coil (coil-2) during the vessel detection and heating processes.

7. A vessel detection method applied in an induction heating cooker (1) comprising concentric dual coils, the method comprising the steps of
- sending signal at a detection frequency (F-detection) simultaneously by the power control circuits (3) in order to detect the presence of a vessel on the concentric dual coils,
- by updating the detection frequency (F-detection) according to the feedback received from the power control circuit (3) of the first coil (coil-1), wherein the first coil is one of the concentric dual coils that detects the vessel first, determining a common detection frequency (F-detection-common) for the concentric dual coils and a common heating frequency (F-heating-common) to be applied to the concentric dual coils depending on the power setting selected by the user,
- starting the heating process by applying the common heating frequency (F-heating-common) to the first coil (coil-1) according to the power setting selected by the user,
- continuing the detection process in the second coil (coil-2) at the determined common detection frequency (F-detection-common), wherein the second coil (coil-2) is the other one of the concentric dual coils that completes the vessel detection process after the first coil (coil-1),
- starting the heating process by applying the common heating frequency (F-heating-common) to the second coil (coil-2) when the vessel is detected thereon, and
- deactivating the second coil (coil-2) if the vessel is not detected on the second coil (coil-2).

8. A vessel detection method as in Claim 7, **characterized in that** before the step of starting the heating process by applying the common heating frequency (F-heating-common) to the first coil (coil-1), it is waited for the completion of the vessel detection process in the second coil (coil-2).

9. A vessel detection method as in Claim 8, **characterized in that** a preheating process is applied by operating the first coil (coil-1) at a power lower than the power set during the waiting time elapsing until the detection process in the second coil (coil-2) is completed.

## Patentansprüche

1. Ein Induktionsherd (1) umfasst eine Heizeinrichtung (2) mit konzentrischen Doppelspulen, die magnetische Energie zum Erwärmen eines auf der Heizzone (Z) angeordneten Gefäßes aufbringen, zwei Leistungsregelschalter (3), die es ermöglichen, die Spulen getrennt anzutreiben und einen Mikrokontrolleur (4), der den Betrieb der Leistungssteuerschaltungen (3) steuert, gekennzeichnet ist es durch den Mikrokontrolleur (4),
- welches den Erkennungsprozess des auf der Heizzone (Z) befindlichen Gefäßes durch gleichzeitiges Senden von einem Signal mit einer einheitlichen Erkennungsfrequenz (F-Erkennung) an die Spulen mit Hilfe der Leistungsregelschaltung (3) startet,
- welches die gemeinsame Erfassungsfrequenz (F-Detektion-Gemeinsamkeit) für die Spulen gemäß der von der ersten Spule (Spule-1) empfangenen Rückkopplung bestimmt, wobei die erste Spule eine der konzentrischen Doppelspulen ist, die das Gefäß zuerst erfasst, und
- dass es ermöglicht, das Vorhandensein des Gefäßes durch das Anlegen der gemeinsamen Erfassungsfrequenz (F-Detektion-Gemeinsamkeit) an die zweite Spule (Spule-2) zu erfassen, wobei die zweite Spule (Spule-2) die andere der konzentrischen ist Doppelspulen, die den Gefäßerkennungsprozess nach der ersten Spule (Spule 1) abschließen.

2. Ein Induktionsherd (1), wie in Anspruch 1 aufgeführt, **ist dadurch gekennzeichnet, dass** der Mikrokontrolleur (4) die gemeinsame Heizfrequenz (F-Heizung-Gemeinsam) bestimmt und an die erste Spule (Spule-1) und zweite Spule (Spule-2) angelegt werden soll , die bei jeder Leistungseinstellung entsprechend von der ersten Spule (Spule-1) eine Rückmeldung erhält.

3. Ein Induktionsherd (1), wie in Anspruch 1 oder 2 aufgeführt, **ist dadurch gekennzeichnet, dass** der Mikrokontrolleur (4) es ermöglicht, dass die erste Spule (Spule-1) mit Strom zu versorgt wird, um das Gefäß zu erwärmen, ohne auf das Ergebnis des Erkennungsvorgangs zu warten wenn die zweite Spule (Spule-2) von dem Gefäßerkennungsprozess in der ersten Spule (Spule-1) abgeschlossen ist.

4. Ein Induktionsherd (1), wie in Anspruch 1 oder 2 aufgeführt, **ist dadurch gekennzeichnet, dass** der Mikrokontrolleur (4) auf das Ergebnis des Erkennungsvorgangs in der zweiten Spule (Spule-2) wartet, wenn der Gefäßerkennungsvorgang in der ersten Spule (Spule-1) abgeschlossen ist und es ermöglicht, dass die erste Spule (Spule-1) und die zweite Spule (Spule-2) gleichzeitig für den Erwärmungsprozess erregt werden, um das Gefäß zu erwärmen.

5. Ein Induktionsherd (1), wie in Anspruch 4 aufgeführt, **ist dadurch gekennzeichnet, dass** der Mikrokontrolleur (4) das Aufbringen einer Vorheizung durch Betreiben der ersten Spule (Spule-1) mit einer Leistung bewirkt, welches niedriger als die während der Wartezeit eingestellte Leistung ist, bis der Erfassungsvorgang in der zweiten Spule (Spule-2) ist und am Ende des Gefäßerfassungsvorgangs in der ersten Spule (Spule-1) abgeschlossen ist.

6. Ein Induktionsherd (1), wie in Anspruch 1 aufgeführt, **ist dadurch gekennzeichnet, dass** der Mikrokontrolleur (4) es den Leistungssteuerschaltungen (3) ermöglicht, ein Signal mit der gleichen Phase während der Gefäßerkennung und Erwärmung an die erste Spule (Spule-1) und an die zweite Spule (Spule-2) zu übertragen.

7. Ein Gefäßdetektionsverfahren, wird in einem Induktionsherd (1) angewendet und umfasst konzentrische Doppelspulen, wobei das Verfahren die folgenden Schritte umfasst:
- ein gleichzeitiges Senden eines Signals mit einer Erfassungsfrequenz (F-Erfassung) durch die Leistungssteuerschaltungen (3), um das Vorhandensein eines Gefäßes auf den konzentrischen Doppelspulen zu erfassen,
- durch das Aktualisieren der Erfassungsfrequenz (F-Erfassung) gemäß der von der Leistungssteuerschaltung (3) der ersten Spule (Spule-1) empfangenen Rückmeldung, wobei die erste Spule eine der konzentrischen Doppelspulen ist, welches das Gefäß zuerst erfasst; das Bestimmen einer gemeinsamen Erfassungsfrequenz (F-Detektion-Gemeinsamkeit) für die konzentrischen Doppelspulen und einer gemeinsamen Heizfrequenz (F-Heizung-Gemeinsamkeit), die an die konzentrischen Doppelspulen abhängig von der vom Benutzer gewählten Leistungseinstellung, angelegt werden soll,
- Starten des Heizvorgangs durch Anlegen der gemeinsamen Heizfrequenz (F-Heizung-Gemeinsamkeit) an die erste Spule (Spule-1) anhand der vom Benutzer gewählten Leistungseinstellung,
- Fortsetzen des Erfassungsprozesses in der zweiten Spule (Spule-2) mit der bestimmten gemeinsamen Erfassungsfrequenz (F-Erfassung-gemeinsam), wobei die zweite Spule (Spule-2) die andere der konzentrischen Doppelspulen ist, die die Gefäßerfassung Prozess nach der ersten Spule (Spule-1) vervollständigt,
- Starten des Heizvorgangs durch Anlegen der gemeinsamen Heizfrequenz (F-Heizung-Gemeinsam) an die zweite Spule (Spule-2), wenn das Gefäß darauf erfasst wird, und
- das Deaktivieren der zweiten Spule (Spule-2), wenn das Gefäß auf der zweiten Spule (Spule-2) nicht erkannt wird.

8. Ein Gefäßerkennungsverfahren, wie in Anspruch 1 aufgeführt, **ist dadurch gekennzeichnet, dass** vor dem Schritt des Startens des Heizvorgangs durch das Anlegen der gemeinsamen Heizfrequenz (F-Heizung-Gemeinsam) an die erste Spule (Spule-1) auf den Abschluss der Gefäßerkennungsprozess in der zweiten Spule (Spule-2) gewartet wird.

9. Ein Gefäßerkennungsverfahren, wie in Anspruch 8 aufgeführt, **ist dadurch gekennzeichnet, dass** ein Vorheizprozess angewendet wird, indem die erste Spule (Spule-1) mit einer Leistung betrieben wird, die niedriger ist als die während der Wartezeit eingestellte Leistung, bis der Erkennungsprozess in der zweiten Spule (Spule-2) abgeschlossen ist.

## Revendications

1. Un appareil de cuisson à chauffage par induction (1) **comprenant** un appareil de chauffage (2) à doubles bobines concentriques appliquant de l'énergie magnétique pour chauffer un récipient placé sur une zone de chauffage (Z), deux circuits de commande de puissance (3) qui permettent d'actionner les bobines séparément, et un micro-contrôleur (4) qui contrôle le fonctionnement des circuits de commande de puissance (3), **caractérisé par** un micro-contrôleur (4)
- qui commence le processus de détection du récipient placé sur la zone de chauffage (Z) en transmettant un signal à une fréquence de détection constante (F détection) simultanément aux bobines au moyen du circuit de commande de puissance (3),
- qui détermine la fréquence de détection commune (F détection commune) des bobines en fonction du feedback reçu de la première bobine (bobine 1), où la première bobine est l'une des doubles bobines concentriques qui détecte le récipient en premier, et
- qui permet de détecter la présence du récipient en appliquant la fréquence de détection commune (F-détection-commune) à la seconde bobine (bobine 2), où la seconde bobine (bobine 2) est l'autre des doubles bobines concentriques qui complète le processus de détection du récipient après la première bobine (bobine 1).

2. Un appareil de cuisson à chauffage par induction (1) selon la revendication 1, **caractérisé par un** micro-contrôleur (4) qui détermine la fréquence de chauffage commune (F-chauffage commune) à appliquer à la première bobine (bobine 1) et à la seconde bobine (bobine 2) à n'importe quel réglage de puissance en fonction du feedback reçu de la première bobine (bobine 1).

3. Un appareil de cuisson à chauffage par induction (1) selon la Revendication 1 ou 2, **caractérisé par un** micro-contrôleur (4) qui permet d'activer la première bobine (bobine 1) afin de chauffer le récipient sans attendre le résultat du processus de détection de la seconde bobine (bobine 2) lorsque le processus de détection du récipient de la première bobine (bobine 1) est terminée.

4. Un appareil de cuisson à chauffage par induction (1) selon la Revendication 1 ou 2, **caractérisé par** le micro-contrôleur (4) qui attend le résultat du processus de détection dans la seconde bobine (bobine 2) lorsque le processus de détection du récipient dans la première bobine (bobine-1) est terminée et qui permet à la première bobine (bobine-1) et à la seconde bobine (bobine-2) d'être alimentées simultanément pour le processus de chauffage afin de chauffer le récipient.

5. Un appareil de cuisson à chauffage par induction (1) selon la Revendication 4, **caractérisé par** le micro-contrôleur (4) qui assure l'application d'un préchauffage en actionnant la première bobine (bobine 1) à une puissance inférieure à la puissance définie pendant le temps d'attente écoulé jusqu'à ce que le processus de détection dans la seconde bobine (bobine 2) soit terminé à la fin du processus de détection du récipient dans la première bobine (bobine 1).

6. Un appareil de cuisson à chauffage par induction (1) selon la Revendication 1, **caractérisé par le** micro-contrôleur (4) qui permet aux circuits de commande de puissance (3) de transmettre un signal de même phase à la première bobine (bobine 1) et à la seconde bobine (bobine 2) pendant les processus de détection et de chauffage du récipient.

7. Un procédé de détection de récipient appliqué dans l'appareil de cuisson à chauffage par induction (1) comprenant des bobines concentriques doubles, le procédé comprenant les étapes consistant à:
- envoyer un signal à une fréquence de détection (F détection) simultanément par les circuits de commande de puissance (3) afin de détecter la présence d'un récipient sur les doubles bobines concentriques,
- déterminer une fréquence de détection commune (F détection commune) pour les doubles bobines concentriques en mettant à jour la fréquence de détection (F détection) en fonction du feedback reçu du circuit de commande de puissance (3) de la première bobine (bobine 1), où la première bobine est l'une des doubles bobines concentriques qui détecte le récipient en premier, et déterminer une fréquence de chauffage commune (F chauffage commune) à appliquer aux doubles bobines concentriques en fonction du réglage de puissance sélectionné par l'utilisateur,
- démarrer le processus de chauffage en appliquant la fréquence de chauffage commune (F chauffage commune) à la première bobine (bobine 1) en fonction du réglage de puissance sélectionné par l'utilisateur,
- poursuivre le processus de détection dans la seconde bobine (bobine 2) à la fréquence de détection commune déterminée (F détection commune), où la seconde bobine (bobine 2) est l'autre des doubles bobines concentriques complétant le processus de détection du récipient après la première bobine (bobine 1),
- démarrer le processus de chauffage en appliquant la fréquence de chauffage commune (F chauffage commune) à la seconde bobine (bobine 2) lorsque le récipient est détecté sur celle-ci, et
- désactiver la seconde bobine (bobine 2) si le récipient n'est pas détecté sur la seconde bobine (bobine 2).

8. Un procédé de détection de récipient selon la Revendication 7, **caractérisé en ce qu'a**vant l'étape de démarrage du processus de chauffage en appliquant la fréquence de chauffage commune (F chauffage commune) à la première bobine (bobine-1), l'achèvement du processus de détection du récipient dans la seconde bobine (bobine 2) est attendu.

9. Un procédé de détection de récipient selon la Revendication 8, **caractérisé en ce qu'un** procédé de préchauffage est appliqué en actionnant la première bobine (bobine 1) à une puissance inférieure à la puissance réglée pendant le temps d'attente écoulé jusqu'à ce que le processus de détection dans la seconde bobine (bobine-2) est terminée.
